Europäisches Patentamt

European Patent Office

Office européen des brevets

(19)

(11) Publication number: **0 020 033**
**B1**

# EUROPEAN PATENT SPECIFICATION

(12)

(45) Date of publication of patent specification: 09.03.83

(51) Int. Cl.³: **B 62 M 9/12**

(21) Application number: 80301454.7

(22) Date of filing: 02.05.80

(54) Cycle derailleur with axially fixed pulley.

(30) Priority: 04.05.79 JP 59800/79

(43) Date of publication of application:
10.12.80 Bulletin 80/25

(45) Publication of the grant of the patent:
09.03.83 Bulletin 83/10

(84) Designated Contracting States:
DE FR GB IT NL

(56) References cited:
FR - A - 799 917
FR - A - 835 203
FR - A - 844 979
FR - A - 1 021 813

(73) Proprietor: SHIMANO INDUSTRIAL COMPANY
LIMITED
77, 3-cho Oimatsu-cho Sakai-shi
Osaka (JP)

(72) Inventor: Shimano, Keizo
3-81 Minamimachi
Midorigaoka Sakai-shi Osaka (JP)

(74) Representative: Szczuka, Jan Tymoteusz et al,
Cruikshank & Fairweather 19 Royal Exchange
Square
Glasgow G1 3AE Scotland (GB)

Courier Press, Leamington Spa, England

Cycle derailleur with axially fixed pulley

This invention relates to a cycle derailleur for use in switching a drive chain between different sprockets of a multi-stage sprocket assembly for changing gear, which derailleur comprises a fixing member; a support member connected to said fixing member so as to be movable relative thereto; a return spring means disposed for acting between said fixing member and support member; a change-over frame pivotally supported on said support member via a first generally horizontally extending, in use, shaft; a coiled spring means arranged for acting between said support member and said change-over frame for tensioning a drive chain of the cycle in use of the derailleur; a first pulley rotatably mounted around said horizontally extending shaft; and a second pulley rotatably supported on the change-over frame by means of a second generally horizontally extending shaft substantially parallel to said first shaft.

Generally, most cycle derailleurs have a parallelogram linkage mechanism comprising a fixing member, two parallel link members connected thereto, and a movable member connected to the link members. The linkage mechanism is transformed to move the movable member, so that a change-over frame supported on the movable member and having two pulleys, switches a drive chain to a desired sprocket of a multi-stage sprocket assembly.

In a derailleur of the above type of construction, since the two pulleys, (tension pulley and guide pulley), move with the movable member, the drive chain travelling first over a front chain gear wheel, enters the derailleur from different positions according to the gears between which it is being changed thereby causing the drive chain to rock or shift laterally. This rocking can result in the drive chain coming off the sprockets especially in the case of cycles used in cross country races. Derailleurs employing such a linkage mechanism are also relatively complicated in their construction, especially in the context of a two-stage gear change as used for cycles in cross-country races, and thus are expensive to produce.

FR—A—1021813 discloses a cycle derailleur having a support member supported by a vertically extending shaft $A$ for pivoting therearound to laterally displace two chain pulleys $I$ and $G$ for gear changing. Both the pulleys are spaced substantially from the vertical shaft $A$ so that both are displaced substantially during gear changing as in parallelogram linkage mechanism derailleurs thereby giving rise to similar problems of chain rocking and accidental detachment from the sprockets.

It is an object of the present invention to minimize one or more of the above disadvantages, and in particular to provide a cycle derailleur which is simple to construct and arranged for receiving a drive chain in a constant position thereby to change speed without rocking of the chain.

The present invention provides a cycle derailleur for use in switching a drive chain between different sprockets of a multi-stage sprocket assembly for changing gear which derailleur comprises a fixing member; a support member connected to said fixing member so as to be movable relative thereto; a return spring means disposed for acting between said fixing member and support member; a change-over frame pivotally supported on said support member via a first, in use, generally horizontally extending shaft; a coiled spring means arranged for acting between said support member and said change-over frame for tensioning a drive chain of the cycle in use of the derailleur; a first pulley rotatably mounted around said horizontally extending shaft; and a second pulley rotatably supported on the change-over frame by means of a second generally horizontally extending shaft substantially parallel to said first shaft characterized in that the support member is connected to said fixing member via a third, in use generally vertically extending, shaft, the rotational axis of said first shaft intersecting, substantially at right angles, an extension of the rotational axis of said third shaft, whereby the position of the first pulley in an axial direction thereof is maintained substantially fixed during pivoting of the change-over frame about said third shaft for gear changing.

The derailleur of the present invention employs no linkage mechanism in the sense of link members which extend between and interconnect other spaced apart members and thus is relatively simple in construction in comparison with conventional derailleurs. Furthermore, by having the first pulley supported on the second horizontally extending shaft and having the axes of the first and second shafts intersecting substantially at right angles, the first pulley is maintained in a substantially fixed position (in an axial direction) thereby assuring that the drive chain is always received in substantially the same position. Thus the drive chain is guided by the second pulley during switching to a desired sprocket for changing gear and this is effected with a minimum of rocking. This makes the derailleur of the invention particularly suitable for use on cycles in cross-country races.

Further preferred features of the invention will appear from the following description given by way of example with reference to the accompanying drawings in which:

Fig. 1 is a front view of an embodiment of a cycle derailleur of the present invention;

Fig. 2 is a partially sectioned plan view thereof; and

Fig. 3 is a sectional view taken on the line III—III in Fig. 2.

The drawings show a derailleur for a two-stage gear change which comprises a fixing member 1 for securing, in use, to a cycle frame (not shown), a support member 2 supported pivotally on the fixing member 1 by means of a third vertically extending shaft 3. A change-over frame 4 is supported pivotally on the support member 2 by means of a first horizontally extending shaft 5 whose principal axis $Y$—$Y$ intersects the principal axis $X$—$X$ of the third shaft 3 substantially at right angles thereto. A first pulley 6 is supported rotatably on the first shaft 5, and a second pulley 7 is supported rotatably on the forward end of the change-over frame 4 through a second shaft 8 extending horizontally and parallel to the first shaft 5. A fixture 9 is provided at the fixing member 1 for connection of a control cable inner wire (not shown) with a support 10 being provided on the support member 2 for holding an outer sheath of the control cable.

In the above described construction, the fixing member 1 is formed of a metallic plate and comprises a bracket member 1a which, in use, is mounted together with a hub shaft in a cycle fork end with an extension 1b extending in a forwards direction with respect to the cycle from the bracket member 1a along a chain stay. The extension 1b extends horizontally laterally from the upper edge of the forward end to form a horizontal portion 1c. The horizontal portion 1c carries thereon a bush 11 for rotatably supporting the third shaft 3, and pivotally supports an arm 12 bearing the fixture 9 for the control wire, by means of a fourth vertically extending shaft 13.

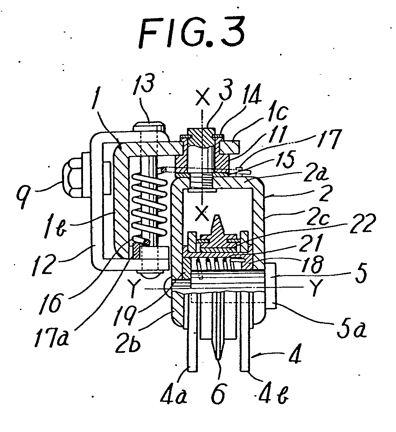

The support member 2, as shown in Fig. 3, comprises a horizontal top plate 2a and a pair of opposed side plates 2b and 2c connected perpendicularly thereto, and is generally in the form of an inverted U-shape in section. The third shaft 3 is screw threadedly connected to the top plate 2a. The first shaft 5 is fixed across the opposed side plates 2b, and 2c and supports the change-over frame 4. The top plate 2a is extended 2d to carry the support 10 for the outer sheath. The support member 2 is supported pivotally on the fixing member 1 via the third shaft 3 which extends through the bush 11 and is retained therein by an E-ring 14, a washer 15 being provided between the bush 11 and the support member 2. One end of a return spring 16 is disposed and wound around, respectively, the fourth shaft 13 and retained at one end by a spring seat 17a provided on the arm 12 and at the other end by a spring seat 17 provided at the top plate 2a of the support member 2, the return spring 16 functioning both to store energy and to restore the support member 2 to a starting position thereof.

The first shaft 5 has a head 5a and is axially stepped and supports the change-over frame 4 pivotally through a tubular shaft 18 having an annular bearing end surface and through a generally disc-shaped bush 19.

In detail, the tubular shaft 18 is mounted in a pair of opposed plates 4a and 4b constituting the change-over frame 4 and has at one end said bush 19 fixed thereto, so that the change-over frame 4 is supported pivotally about the first shaft 5 by means of the coaxial tubular shaft 18 and bush 19. The tubular shaft 18 has an inner diameter larger than an outer diameter of the first shaft 5 to define an annular chamber therebetween and rotatably supports at its outer periphery the first pulley 6 through a metal bearing 22. A coiled tension spring 21 is housed in said chamber between the inner periphery of the tubular shaft 18 and the outer periphery of the first shaft 5, and is retained at one end to the first shaft 5 and at its other end to the tubular shaft 18 fixed to the change-over frame 4, thereby biasing the change-over frame 4 in a direction for tensioning of a drive chain (not shown). In other words, the tension spring 21 applies a substantially constant tension to the drive chain, though this is not an essential feature of the present invention.

The drawings also show an adjusting bolt 23 for adjusting the range of pivotal movement of the second pulley 7 carried by the change-over frame 4. In general this may be effected in conventional manner by providing a position adjusting means between one of said change-over frame and support member and said fixing member so as to adjust a limit position of the change-over frame relative to the fixing member. In the specific embodiment shown the adjusting bolt 23 is screw threadedly engaged in and supported by part of the support member 2 and abuts at its tip against the extension 1b of the fixing member 1 and is controllable through a window 1d provided at the forward end of the extension 1b.

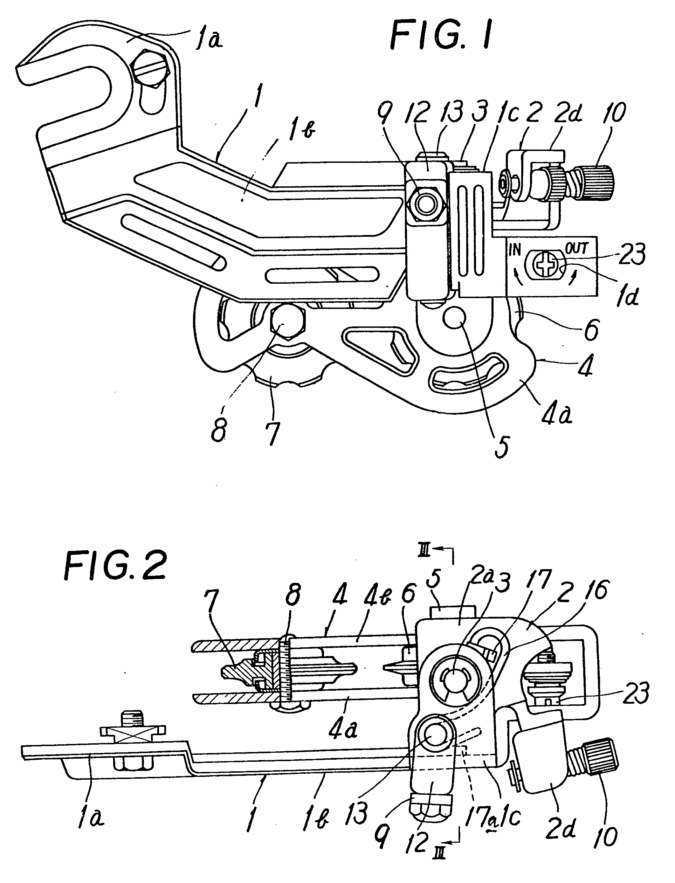

In use of the above described construction, the control wire is fixed to the fixture 9 and the control cable outer sheath 10 is fixed to the support 10, so that a control lever (not shown) connected in conventional manner can be operated to pull the control wire to swing the change-over frame 4 mounted on the support member 2 around the third shaft 3 against the force of the return spring 16 or to allow the change-over frame 4 to move in a return direction under the influence of said return spring 16, whereby the drive chain is guided by the first and second pulleys 6 and 7, and switched to a desired sprocket of the multi-stage sprocket assembly. Furthermore, the change-over frame 4 is biased clockwise (as viewed in Fig. 1) by the coiled tension spring 21 so as to pivot about the first shaft 5 when the drive chain is switched and thereby apply constant tension to the drive chain.

It should be noted that the first pulley 6 is scarcely shifted and its position is maintained substantially fixed when the drive chain is switched due to the fact that the pulley 6 is supported by the first shaft 5 which and whose principal, rotational axis $Y$—$Y$ intersect the principal, rotational axis X—X of the third shaft 3 substantially at right angles. Hence, the second pulley 7 functions as a guide pulley as well as a tension pulley because the change-over frame 4 pivots as a whole around the third shaft 3 as well as around the first shaft 5, whereby the drive chain, when it is switched between sprockets suffers minimal rocking thus contributing to relatively smooth switching between sprockets.

In the above described embodiment, the fixture 9 for the control wire is provided on the arm 12 which is pivotally supported to the fixing member 1. Thus, when an increased resistance against gear changing is experienced on pulling the control wire to switch the drive chain to the low speed sprocket when the drive chain is stationary i.e. pedalling is not taking place, then the arm 12 pivots nevertheless and energy is stored in the spring 16. Subsequently, upon removal of the resistance, the speed change is completed by means of release of the spring and its stored energy.

Alternatively, the fixture 9 for the control wire could be mounted on the support member 2 and the support 10 for the outer sheath on the arm 12.

In our contemporaneously filed EP—A—0 018 842 there is described and claimed a derailleur similar to that described herein, and to which attention is hereby drawn.

**Claims**

1. A cycle derailleur for use in switching a drive chain between different sprockets of a multi-stage sprocket assembly for changing gear, which derailleur comprises a fixing member (1); a support member (2) connected to said fixing member (1) so as to be movable relative thereto; a return spring means (16) disposed for acting between said fixing member (1) and support member (2); a change-over frame (4) pivotally supported on said support member (2) via a first, in use generally horizontally extending, shaft (5); a coiled spring means (21) arranged for acting between said support member (2) and said change-over frame (4) for tensioning a drive chain of the cycle in use of the derailleur; a first pulley (6) rotatably mounted around said horizontally extending shaft (5); and a second pulley (8) rotatably supported on the change-over frame (4) by means of a second generally horizontally extending shaft (8) substantially parallel to said first shaft (5) characterized in that the support member (2) is connected to said fixing member (1) via a third, in use generally vertically extending, shaft (3), the rotational axis of said first shaft (5) intersecting, substantially at right angles, an extension of the rotational axis of said third shaft (3), whereby the position of the first pulley (6) in an axial direction thereof is maintained substantially fixed during pivoting of the change-over frame (4) about said third shaft (3) for gear changing.

2. A cycle derailleur according to Claim 1, wherein said fixing member (1) comprises a bracket member (1a) securable at a fork end of a said cycle and an extension (1b) disposed for extending, in use, from said bracket member (1a) along a chain stay of the cycle, said extension (1b) having at the forward end thereof a horizontal portion (1c) which extends towards the sprockets of the multi-stage sprocket assembly and supports the third vertical shaft (3), and supporting inwardly towards said sprocket said support member (2) carrying said change-over frame (4).

3. A cycle derailleur according to Claim 1 or Claim 2, wherein said support member (2) has a top plate (2a) and a pair of side plates (2b, 2c) connected thereto and has an inverted generally U-shaped form in section, said top plate (2a) mounting said third vertical shaft (3), said side plates (2b, 2c) supporting therebetween said first horizontal shaft (5).

4. A cycle derailleur according to Claim 1, wherein is provided a position adjusting means (23) disposed for acting between one of said change-over frame (4) and support member (2), and said fixing member (1) so as to adjust a limit position of the change-over frame relative to the fixing member (1) thereby to adjust the range of movement of said change-over frame (4) relative to said fixing member (1).

5. A cycle derailleur according to any one of Claims 1 to 4, wherein one of said fixing member (1) and support member (2) has a fixture (9) for a control wire for swingably operating said supporting member, and the other has a support (10) for a control cable outer sheath for said wire.

6. A cycle derailleur according to Claim 5, wherein said fixing member (1) pivotally supports an arm (12) through a fourth shaft (13) extending generally vertically, in use, said arm (12) carrying one of said fixture (9) and support (10), said fourth shaft (13) supporting therewith said return spring means (16), said return means (16) being retained at one end to said arm (12) and at its other end to said support member (2).

**Revendications**

1. Dérailleur pour bicyclette, utilisable pour transférer une chaîne d'entraînement entre différents pignons d'un ensemble de pignons à plusieurs étages afin de changer de vitesse, lequel dérailleur comprend une pièce de fixation (1); une pièce de support (2) reliée à la pièce de fixation (1) de manière à pouvoir se déplacer par rapport à celle-ci; un ressort de rappel (16) disposé de manière à exercer son action entre la pièce de fixation (1) et la pièce de support (2); un train d'inversion de vitesse (4) supporté de façon pivotante sur la pièce de support (2) par l'intermédiaire d'un premier arbre (5) placé sensiblement horizontalement pendant l'utilisation; un ressort à enroulement hélicoïdal (21) disposé de manière à exercer son action entre la pièce de support (2) et le train d'inversion (4), pour tendre une chaîne d'entraînement de la bicyclette lorsque le dérailleur est utilisé; une première poulie (6) montée en rotation sur ledit arbre horizontal (5); et une deuxième poulie (7) supportée en rotation sur le train d'inversion (4) au moyen d'un deuxième arbre sensiblement horizontal (8) sensiblement parallèle au premier arbre (5); lequel dérailleur est caractérisé en ce que la pièce de support (2) est reliée à la pièce de fixation (1) par l'intermédiaire d'un troisième arbre (3) sensiblement vertical en position d'utilisation, l'axe de rotation du premier arbre (5) coupant sensiblement à angle droit un prolongement de l'axe de rotation du troisième arbre (3), de sorte que la position de la première poulie (6) dans une direction axiale est maintenue sensiblement fixe pendant le pivotement du train d'inversion de vitesse (4) autour du troisième arbre (3), pour réaliser le changement de vitesse.

2. Dérailleur pour bicyclette suivant la revendication 1, caractérisé en ce que la pièce de fixation (1) comprend une console (1a), qui peut être fixée à une extrémité fourchue d'une bicyclette, et un prolongement (1b) disposé de façon à s'étendre, en position d'utilisation, à partir de ladite console (1a) le long d'un appui de la chaîne de la bicyclette, ce prolongement (1b) comportant à son extrémité avant une partie horizontale (1c) qui s'étend en direction des pignons de l'ensemble de pignons à plusieurs étages et qui supporte le troisième arbre vertical (3), ledit prolongement supportant intérieurement en direction dudit pignon, la pièce de support (2) qui porte le train d'inversions (4).

3. Dérailleur pour bicyclette suivant la revendication 1 ou la revendication 2, caractérisé en ce que la pièce de support (2) comporte une plaque supérieure (2a) et deux plaques latérales (2b, 2c) reliées à la précédente, la pièce support (2) ayant ainsi une section sensiblement en forme de U inversé, la plaque supérieure supportant entre elles le premier arbre horizontal (5).

4. Dérailleur pour bicyclette suivant la revendication 1, caractérisé en ce qu'il comporte des moyens (23) de réglage de position disposés pour exercer leur action entre le train d'inversion (4) ou la pièce support (2) d'une part, et la pièce de fixation (1) d'autre part, afin de régler une position limite du train d'inversion par rapport à la pièce de fixation (1), ce qui permet de régler la plage de mouvement du train d'inversion (4) par rapport à la pièce de fixation (1).

5. Dérailleur pour bicyclette suivant l'une quelconque des revendications 1 à 4, caractérisé en ce que la pièce de fixation (1) ou la pièce de support (2) comporte une attache (9) pour un câble de commande du fonctionnement oscillant de la pièce de support, l'autre de ces pièces comportant un support (10) pour une gaine extérieure dudit câble de commande.

6. Dérailleur pour bicyclette suivant la revendication 5, caractérisé en ce que la pièce de fixation (1) supporte de façon pivotante un bras (12), par l'intermédiaire d'un quatrième arbre (13) disposé sensiblement verticalement en position utilisation, ce bras (12) portant la fixation (9) ou le support (10), le quatrième arbre (13) supportant le ressort de rappel (16), lequel est retenu à l'une de ses extrémités sur le bras (12) et à son autre extrémité sur la pièce support (2).

**Patentansprüche**

1. Fahrradgangschaltung zum Umschalten einer Antriebskette zwischen verschiedenen Kettenrädern einer Gangschaltbaugruppe mit mehreren Kettenrädern, wobei die Gangschaltung aus einem Befestigungsglied (1), einem damit verbundenen und gegenüber diesem beweglich gelagerten Stützglied (2), einer zwischen diesem Befestigungsglied (1) und dem Stützglied (2) wirkenden Rückstellfedereinrichtung (16), einem auf diesem Stützglied (2) über eine erste, im Gebrauch sich allgemein horizontal erstreckende Welle (5) schwenkbar gelagerten Umschaltrahmen (4), einer zwischen jenem Stützglied (2) und diesem Umschaltrahmen (4) wirkend angeordneten Spiralfeder (21) zum Spannen einer Antriebskette des Fahrrads beim Gebrauch der Gangschaltung, einer ersten um die besagte, sich horizontal erstreckende Welle (5) drehbar gelagerten Scheibe (6) und einer zweiten, auf dem Umschaltrahmen (4) mittels einer zweiten, sich allgemein horizontal und im wesentlichen parallel jener ersten Welle (5) erstreckenden Welle (8) drehbar gelagerten Scheibe (7) besteht, dadurch gekennzeichnet, dass das Stützglied (2) über eine dritte, im Gebrauch sich allgemein vertikal erstreckende Welle (3) mit jenem Befestigungsglied (1) verbunden ist, wobei die Drehachse jener ersten Welle (5) eine Verlängerung der Drehachse dieser dritten Welle (3) im wesentlichen rechtwinklig schneidet, so dass die Stellung der ersten Scheibe (6) in ihrer axialen Richtung während der Schwenkung des Umschaltrahmens (4) um diese dritte Welle (3) zum Gangwechsel im wesentlichen festgelegt ist.

2. Fahrradgangschaltung nach Anspruch 1, worin das besagte Befestigungsglied (1) ein an einem Gabelende dieses Fahrrads anbringbares Bügelglied (1a) und einen so angeordneten Ansatz (1b) aufweist, dass dieser sich im Gebrauch von jenem Bügelglied (1a) entlang eines Kettenhalters des Fahrrads erstreckt, wobei dieser Ansatz (1b) an seinem Vorderende einen horizontalen Teil (1c) besitzt, der sich zu den Kettenrädern der Baugruppe mit mehreren Kettenrädern hin erstreckt und die dritte vertikale Welle (3) abstützt, und jenes, den besagten Umschaltrahmen (4) tragende Stützglied (2) nach innen gegen das besagte Kettenrad abstüzt.

3. Fahrradgangschaltung nach Anspruch 1 oder 2, worin dieses Stützglied (2) ein Kopfplatte (2a) und ein damit verbundenes Paar Seitenplatten (2b, 2c) aufweist und im Querschnitt eine umgekehrte, allgemein U-förmige Gestalt besitzt, wobei jene dritte vertikale Welle (3) auf dieser Kopfplatte (2a) gelagert ist und diese Seitenplatten (2b, 2c) jene erste horizontale Welle (5) zwischen sich abstützen.

4. Fahrradgangschaltung nach Anspruch 1, worin eine Lageeinstellvorrichtung (23) vorgesehen ist, die zwischen entweder dem besagten Umschaltrahmen (4) oder dem Stützglied (2) und jenem Befestigungsglied (1) wirkend angeordnet ist, um eine Grenzlage des Umschaltrahmens gegenüber dem Befestigungsglied (1) einzustellen und somit den Bewegungsbereich dieses Umschaltrahmens (4) gegenüber besagtem Befestigungsglied (1) zu verstellen.

5. Fahrradgangschaltung nach einem der Ansprüche 1 bis 4, worin entweder das besagte Befestigungsglied (1) oder das Stützglied (2) eine Halterung (9) für ein Schaltkabel zur schwenkbaren Betätigung dieses Stützglieds und das andere eine Stütze (10) für den Aussenmantels dieses Schaltkabels aufweist.

6. Fahrradgangschaltung nach Anspruch 5, worin das besagte Befestigungsglied (1) über eine vierte, im Gebrauch sich allgemein vertikal erstreckende Welle (13) einen Arm (12) schwenkbar abstützt, wobei dieser Arm (12) entweder diese Halterung (9) oder die Stütze (10) trägt, wobei die vierte Welle (13) damit jene Rückstellfedereinrichtung (16) abstützt, die an einem Ende an diesem Arm (12) und an ihrem anderen Ende an jenem Stützglied (2) festgehalten ist.

# FIG. 1

# FIG. 2

# FIG.3